# EUROPEAN PATENT APPLICATION

(11) **EP 3 459 641 A2**
(43) Date of publication of application: **27.03.2019**
(21) Application number: 18192051.3
(22) Date of filing: 31.08.2018
(51) Int. Cl.: B05B 1/14, B08B 3/02, B05B 13/06, B08B 9/032, F01D 25/00

(54) **DIRECTIONAL WATER JET CLEANING OF ENGINE BLADES**

(30) Priority: 31.08.2017 SG 10201707125Y
(71) Applicant: United Technologies Corporation, Farmington, CT 06032 (US)
(72) Inventor: BASKARAN, Karthikeyan, 550412 Serangoon Central (SG); GARIMELLA, Balaji Rao, The Linear (SG)
(74) Representative: Dehns

(57) **Abstract**

Aspects of the disclosure are directed to a probe (350) for servicing a turbine blade (300) of an engine. The probe includes hardware configured to couple to a fluid source, a stem, and an opening included in the stem, where the opening is oriented at a non-zero valued angle relative to a length of the stem. In some embodiments, a system includes a turbine blade of an engine, a machine that captures an image of the turbine blade, and a probe that includes a stem with an opening formed in the stem, where the opening is oriented at a non-zero valued angle relative to a length of the stem and removes debris from the turbine blade captured in the image based on an ejection of a pressurized fluid from the opening, where the debris is located on an interior surface of the turbine blade.

## Description

### BACKGROUND

Gas turbine engines, such as those which power aircraft and industrial equipment, employ a compressor to compress air that is drawn into the engine and a turbine to capture energy associated with the combustion of a fuel-air mixture in a combustor. The engine hardware is typically arranged about a longitudinal axis/centerline. The turbine and the compressor architectures utilize alternating stationary and rotating structures, where a pairing of stationary structure and rotating structure is frequently referred to as a stage. The rotating structure is formed as a rotatable disk with blades that extend radially therefrom.

The turbine blades, which are located downstream of the combustor (relative to the direction of airflow through the engine), are subject to elevated temperatures due to exposure to the output of the combustion. The turbine blades are cooled in order to promote efficiency/reliability in operation and extend the operational service lifetime of the turbine blades. United States patent number 7,753,061 (hereinafter referred to as the '061 patent) describes various cooling structures/members of a turbine blade.

When the engine is operated, debris may be ingested by the engine. For example, in the context of an engine of an aircraft, debris generation may be particularly acute during take-off and landing operations. The debris may be ingested by the turbine blade cooling structures, such as for example by cooling holes in an airfoil of the turbine blade. The debris, which may manifest itself as silica or calcium-rich deposits/residue, may adhere to the internal walls/ribs of the turbine blade. The debris has an increased tendency to adhere to the walls/ribs at elevated temperatures. Given current trends towards operating engines at increasing temperatures, the amount/rate of accumulation of debris inside the turbine blade is expected to increase.

The efficiency of the cooling of the turbine blade may be reduced/compromised by the presence of the debris, as the debris has a tendency to impede the flow of air through the turbine blade. The accumulation of the debris also tends to incrementally increase the weight of the engine, thereby negatively impacting fuel efficiency. In this respect, a turbine blade may be subject to cleaning during, e.g., a maintenance/inspection procedure in an effort to remove the debris from the turbine blade. The '061 patent describes subjecting a turbine blade to an autoclave, ultrasonic, and flushing process to remove the debris.

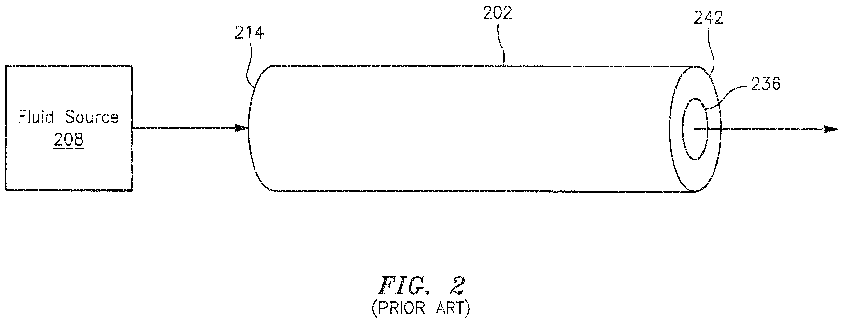

As described in the '061 patent, during the flushing process a probe is inserted into a cavity of the turbine blade and a pressurized fluid (e.g., water) is ejected from an opening at an end of the probe and into the cavity. Referring to FIG. 2, a schematic representation of a probe 202 of the type described in the '061 patent is shown. A fluid source 208 is coupled to a first, proximal end 214 of the probe 202. The fluid from the fluid source 208 enters the first end 214, traverses the length of the probe 202, and is ejected from an opening 236 at a second, distal end 242 of the probe 202. The fluid that is ejected from the opening 236 is used to clean the turbine blade.

As shown in FIG. 2, the opening 236 is oriented along the axial length/span of the probe 202. Stated differently, the fluid is ejected from the opening 236 in a direction aligned with the axial length of the probe 202. The orientation of the opening 236 is ineffective in terms of a removal of debris at various locations of the turbine blade.

### BRIEF SUMMARY

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

Aspects of the disclosure are directed to a probe for servicing a turbine blade of an engine, comprising: hardware configured to couple to a fluid source, a stem, a first opening included in the stem, and a second opening included in the stem, where the first opening is oriented at a non-zero valued angle relative to a length of the stem, and where the second opening is included in an end of the stem. In some embodiments, the angle is a right angle. In some embodiments, the first opening is sized to remove debris from the turbine blade. In some embodiments, the end is a distal end relative to the fluid source.

Aspects of the disclosure are directed to a system comprising: a turbine blade of an engine, a machine that captures an image of the turbine blade, and a probe that includes a stem with an opening formed in the stem, where the opening is oriented at a non-zero valued angle relative to a length of the stem and removes debris from the turbine blade captured in the image based on an ejection of a pressurized fluid from the opening, where the debris is located on an interior surface of the turbine blade. In some embodiments, the machine is an x-ray machine and the image is an x-ray image. In some embodiments, the angle is a right angle. In some embodiments, the debris is located on a rib of the turbine blade. In some embodiments, the turbine blade includes a cooling hole, and the debris enters the turbine blade via the cooling hole. In some embodiments, the system further comprises a processor, and a non-transitory storage device that stores instructions that, when executed by the processor, causes the system to: identify a region in which the debris is located. In some embodiments, the region is identified based on a comparison of the image with at least a second image. In some embodiments, the machine captures a second image of the turbine blade subsequent to the removal of the debris. In some embodiments, the second image is an image of the turbine blade taken after the blade was manufactured that is stored in a non-transitory storage device.

Aspects of the disclosure are directed to a method comprising: obtaining an image of a turbine blade, identifying, based on the image, a region in the interior of the turbine blade that includes debris, inserting a probe into the turbine blade, the probe including a stem with an opening that is oriented at a non-zero valued angle relative to a length of the stem, and activating a fluid source coupled to the probe to remove the debris. In some embodiments, the method further comprises obtaining a second image of the turbine blade subsequent to activating the fluid source, and determining that the debris is removed based on an examination of the second image. In some embodiments, the method further comprises rotating the probe to direct the opening towards the debris. In some embodiments, the method further comprises adjusting an insertion length of the stem based on an identification of the location of the region. In some embodiments, the step of determining that the debris is removed based on an examination of the second image includes comparing the second image to a third image, where the third image is an image of the turbine blade after it was last cleared of debris. In some embodiments, the step of determining that the debris is removed based on an examination of the second image includes comparing the second image to a third image, where the third image is an image of the turbine blade after it was originally manufactured. In some embodiments, the step of obtaining an image includes using an X-ray machine to take the image and the step of obtaining a second image includes using an X-ray machine to take the second image

### BRIEF DESCRIPTION OF THE DRAWINGS

The present disclosure is illustrated by way of example and not limited in the accompanying figures in which like reference numerals indicate similar elements. The figures are not necessarily drawn to scale unless specifically indicated otherwise.
FIG. 1 is a side cutaway illustration of a geared turbine engine.
FIG. 2 is a schematic representation of a probe coupled to a fluid source in accordance with the prior art.
FIG. 3 illustrates a blade with a probe inserted in the blade in accordance with aspects of this disclosure.
FIGS. 4A-4B illustrate a probe in accordance with aspects of this disclosure.
FIGS. 5A-5B represent x-ray images of a blade in accordance with aspects of this disclosure.
FIG. 6 illustrates a computing system in accordance with aspects of this disclosure.
FIG. 7 illustrates a flow chart of a method for servicing a blade in accordance with aspects of this disclosure.

### DETAILED DESCRIPTION

It is noted that various connections are set forth between elements in the following description and in the drawings (the contents of which are incorporated in this specification by way of reference). It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities or a space/gap between the entities that are being coupled to one another.

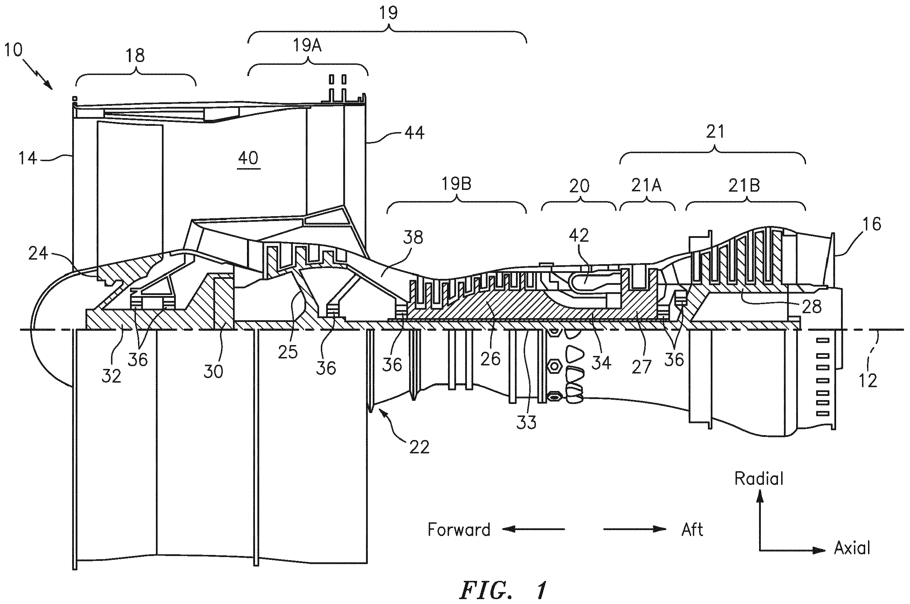

Aspects of the disclosure may be applied in connection with a gas turbine engine. FIG. 1 is a side cutaway illustration of a geared turbine engine 10. This turbine engine 10 extends along an axial centerline 12 between an upstream airflow inlet 14 and a downstream airflow exhaust 16. The turbine engine 10 includes a fan section 18, a compressor section 19, a combustor section 20 and a turbine section 21. The compressor section 19 includes a low pressure compressor (LPC) section 19A and a high pressure compressor (HPC) section 19B. The turbine section 21 includes a high pressure turbine (HPT) section 21A and a low pressure turbine (LPT) section 21B.

The engine sections 18-21 are arranged sequentially along the centerline 12 within an engine housing 22. Each of the engine sections 18-19B, 21A and 21B includes a respective rotor 24-28. Each of these rotors 24-28 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The fan rotor 24 is connected to a gear train 30, for example, through a fan shaft 32. The gear train 30 and the LPC rotor 25 are connected to and driven by the LPT rotor 28 through a low speed shaft 33. The HPC rotor 26 is connected to and driven by the HPT rotor 27 through a high speed shaft 34. The shafts 32-34 are rotatably supported by a plurality of bearings 36; e.g., rolling element and/or thrust bearings. Each of these bearings 36 is connected to the engine housing 22 by at least one stationary structure such as, for example, an annular support strut.

As one skilled in the art would appreciate, in some embodiments a fan drive gear system (FDGS), which may be incorporated as part of the gear train 30, may be used to separate the rotation of the fan rotor 24 from the rotation of the rotor 25 of the low pressure compressor section 19A and the rotor 28 of the low pressure turbine section 21B. For example, such an FDGS may allow the fan rotor 24 to rotate at a different (e.g., slower) speed relative to the rotors 25 and 28.

During operation, air enters the turbine engine 10 through the airflow inlet 14, and is directed through the fan section 18 and into a core gas path 38 and a bypass gas path 40. The air within the core gas path 38 may be referred to as "core air". The air within the bypass gas path 40 may be referred to as "bypass air". The core air is directed through the engine sections 19-21, and exits the turbine engine 10 through the airflow exhaust 16 to provide forward engine thrust. Within the combustor section 20, fuel is injected into a combustion chamber 42 and mixed with compressed core air. This fuel-core air mixture is ignited to power the turbine engine 10. The bypass air is directed through the bypass gas path 40 and out of the turbine engine 10 through a bypass nozzle 44 to provide additional forward engine thrust. This additional forward engine thrust may account for a majority (e.g., more than 70 percent) of total engine thrust. Alternatively, at least some of the bypass air may be directed out of the turbine engine 10 through a thrust reverser to provide reverse engine thrust.

FIG. 1 represents one possible configuration for an engine 10. Aspects of the disclosure may be applied in connection with other environments, including additional configurations for gas turbine engines. Aspects of the disclosure may be applied in connection with non-geared engines.

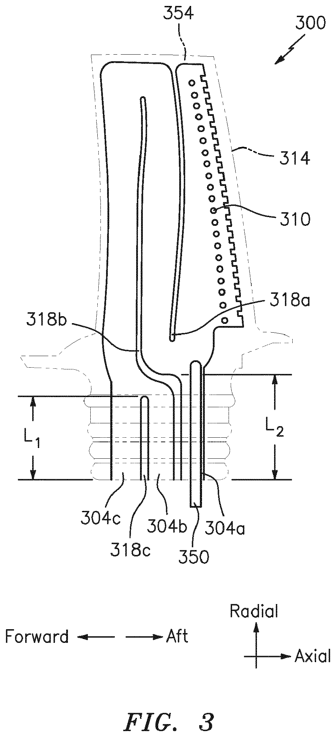

Referring to FIG. 3, a blade 300 in accordance with aspects of this disclosure is shown. The blade 300 may be incorporated as part of one or more sections of an engine, such as for example the turbine section 21 of FIG. 1.

The root of the blade 300 (which is the portion of the blade 300 that is seated in a rotor/disk of the engine) may include one or more ports, such as for example a first port 304a, a second port 304b, and a third port 304c. During engine operation, cooling air from, e.g., the compressor section may be supplied to the blade 300 via the ports 304a-304c. The cooling air may be exhausted by/exit the blade 300 via one or more cooling holes 310. The cooling holes 310 may be located proximate at an aft-most edge 314 of the blade 300.

The interior of the blade 300 may be separated into one or more cavities by one or more wall/ribs, such as for example a first rib 318a, a second rib 318b, and a third rib 318c. The rib 318c may at least partially define the port 304b and the port 304c. The rib 318c may have a given dimension/length L₁.

During operation of an engine, debris may be ingested by the cooling holes 310. The debris may adhere to one or more surfaces of the blade 300, such as for example to surfaces of one or more of the ribs 318a-318c. The blade 300 may be subject to a maintenance activity/procedure to remove the debris from the blade 300.

As described above, the removal of debris may be facilitated by the use of a probe as part of a flushing process. In FIG. 3, a probe 350 is shown as being at least partially inserted into the blade 300 via the port 304a. For example, the probe 350 is shown as being inserted into the blade 300 at an insertion length L₂, which in some embodiments, may be greater than the length L₁. The particular value for the insertion length L₂ may be based on a location of debris in the blade 300, where the location may be determined as described further below.

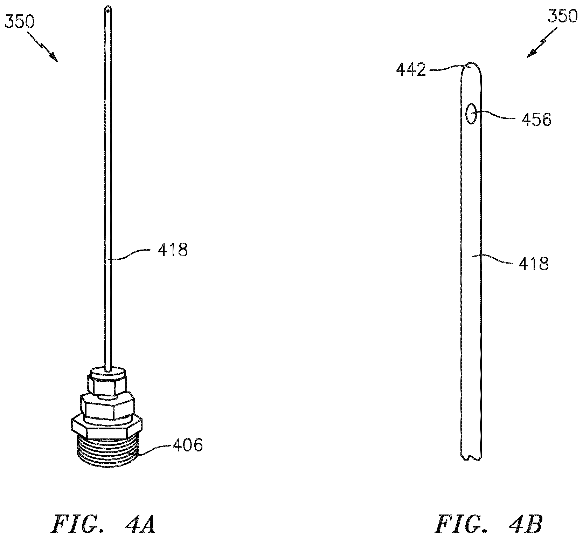

Referring to FIG. 4A, a closer view of the probe 350 of FIG. 3 is shown. The probe 350 may include hardware (e.g., a threaded screw/section 406) that may be configured to couple the probe 350 to a fluid source or manifold as would be known to one of skill in the art. See, e.g., the aforementioned '061 patent for examples of a probe connected to a fluid manifold/fluid source; see also FIG. 2 of this disclosure (fluid source 208). The probe 350 may include a stem 418, where the stem 418 is the portion of the probe 350 that is inserted into the blade 300 as shown in FIG. 3. The stem 418 may be hollow to allow fluid to traverse at least a portion of the length/span of the stem 418.

A closer view of the stem 418 is shown in FIG. 4B. Proximate an end 442 of the probe 350 (where the end 442 is a distal end relative to the fluid source/manifold) an opening 456 may be formed/included in the stem 418. In contrast to the opening 236 of FIG. 2, the opening 456 is not oriented along the length/span of the probe 350/stem 418. Instead, the opening 456 is oriented at a non-zero valued angle (e.g., a right angle or perpendicular) relative to the length/span of the probe 350/stem 418.

Referring to FIGS. 3, 4A, and 4B, the non-zero valued angle/orientation of the opening 456 relative to the length/span of the probe 350/stem 418 may enable a removal of debris located at a mid-span of the blade 300. For example, and as shown in FIG. 3, the opening 456 may be used to remove debris from a mid-span of the rib 318b. In contrast, the probe 202 of FIG. 2 (with opening 236) would not be able to effectively remove debris at a mid-span of the blade 300. Instead, the effectiveness of the probe 202 of FIG. 2 would be limited to debris removal located on, or proximate to, the end wall 354 of FIG. 3.

While FIG. 4B illustrates a stem 418 as including a single opening 456, more than one opening may be included in some embodiments. For example, in some embodiments a probe may include both the opening 456 in the stem 418 as shown in FIG. 4B and an opening at the end 442 (analogous to the opening 236 of FIG. 2). In such embodiments, one of the openings may be selectively closed if that opening is not needed.

In some embodiments, the probe 350 (e.g., the stem 418) may be made of one or more materials. For example, the probe 350 may include a high strength steel. In some embodiments, the steel may correspond to type 304 stainless steel (also referred to in the art as "18-8" stainless steel because of its composition - 18 percent chromium and 8 percent nickel). The material that is used for the probe 350 may be selected to withstand hoop stress generated by the high pressure fluid, where the pressure of the fluid may be within a range of 5000 psi - 10000 psi (approximately within a range of 34 Megapascal - 69 Megapascal).

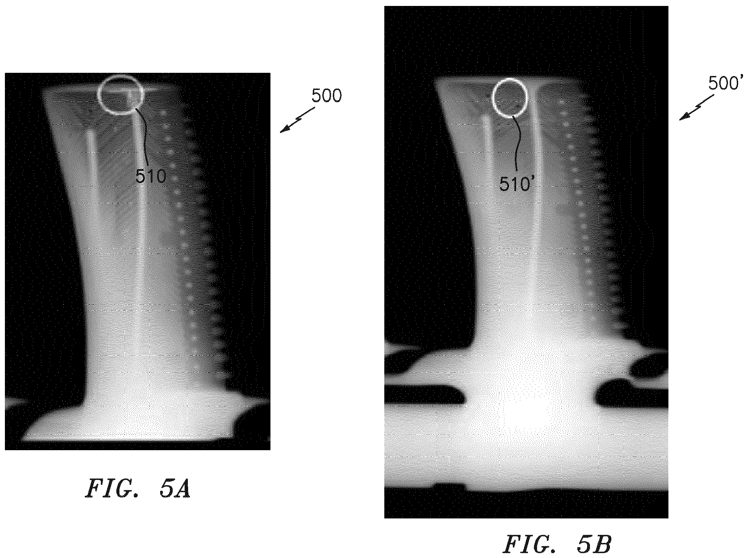

One or more techniques may be used to determine a location of debris that may be internal to a blade (e.g., the blade 300 of FIG. 3). For example, a blade may be x-rayed to determine if debris is present, and if it is, where the debris is located. FIG. 5A illustrates a first x-ray image 500 of a blade. A portion of the blade, denoted by the circled region 510, may include (an aggregate of) debris. A second x-ray image 500' of the blade is shown in FIG. 5B. The circled region 510' denotes a substantial absence of debris.

In some embodiments, the image 500' may correspond to an initial image of the blade, such as for example an image taken after the blade is originally manufactured. Alternatively, the image 500' may correspond to an image of the blade taken after the blade is subjected to a flushing process via the probe 350. Irrespective, the image 500' may correspond to a baseline image that may be used in a comparison with the image 500 to determine a probable location of debris (e.g., the region 510). Image processing software may be used to compare the images 500 and 500' and identify the region 510.

Once region 510 is identified as likely including debris, the probe 350 (and in particular, the opening 456) may be targeted to that region 510. For example, the probe 350/stem 418 may be rotated, as needed, so as to direct the opening 456 towards the region 510/debris. Additionally, the insertion length L₂ (see FIG. 3) may be determined/adjusted based on the identification of the region 510. Alternatively, if a number of different probes of various dimensions (e.g., lengths) are available, a given probe of a given dimension may be selected corresponding to the location of the region 510. More generally, the particular type of probe that is used may be based on one or more parameters, such as for example a type (e.g., make and model number) of the blade, a location of the region that likely includes debris, an amount/density of the debris, etc.

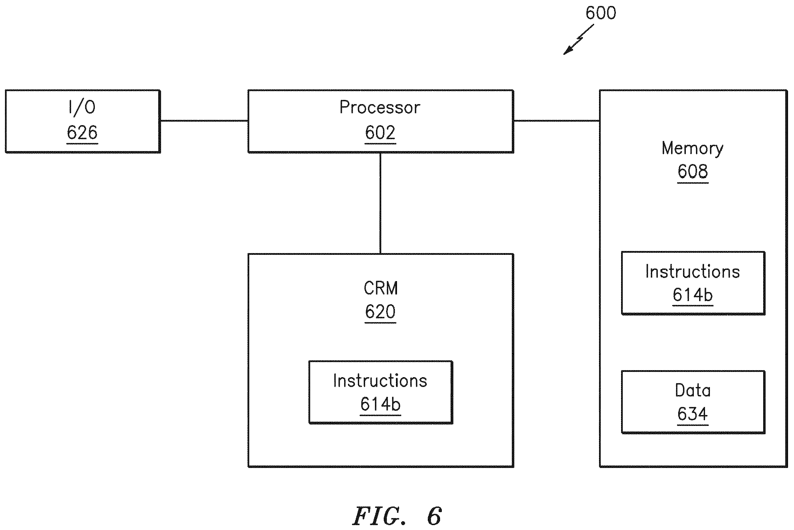

Turning to FIG. 6, a computing system 600 that may be used in some embodiments is shown. The computing system 600 may be used to at least partially automate removal of debris from one or more blades.

The system 600 may include a processor 602 and a memory 608. The memory 608 may store instructions (e.g., instructions 614a) that, when executed by the processor 602, may cause the system 600 to perform one or more methodological acts, such as one or more of the acts described herein. At least a portion of the instructions (e.g., instructions 614b) may be stored on a computer-readable medium (CRM) 620, such as for example a non-transitory CRM. The instructions 614b of the CRM 620 may be used as an alternative to, or in addition to, the use of the instructions 614a of the memory 608. One or both of the memory 608 and the CRM 620, taken individually or collectively, may be referred to as a storage device. Much like the CRM 620, the storage device may be non-transitory in nature.

In some embodiments, the system 600 may include one or more input/output (I/O) devices 626. The I/O devices 626 may provide an interface between the system 600 and one or more other components or devices. The I/O devices 626 may include one or more of a graphical user interface (GUI), a display screen, a touchscreen, a keyboard, a mouse, a joystick, a pushbutton, a microphone, a speaker, a transceiver, an x-ray device/machine, a camera, etc. The I/O devices 626 may be used to output data in one or more formats (e.g., a visual or audio rendering).

The memory 608 may store data 634. The data 634 may include an identification of a blade, one or more images of the blade (e.g., a first, baseline image of the blade and a second image of the blade during a servicing of the blade), an identification of one or more regions of the blade that likely include debris, an identification of one or more probes that may be used to remove debris from the blade, an identification of an insertion length associated with a probe or a degree by which the probe should be rotated to target the debris, etc.

The system 600 is illustrative. One skilled in the art will appreciate, based on a review of this disclosure, that the implementation of the system 600 may be achieved via the use of hardware, software, firmware, or any combination thereof.

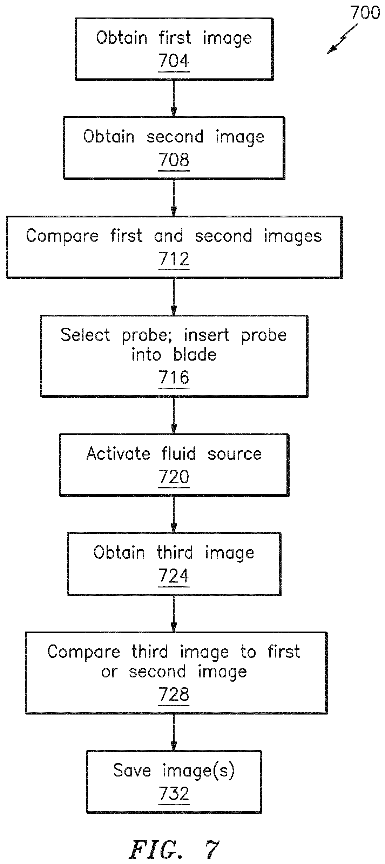

Referring now to FIG. 7, a flow chart of a method 700 for processing/servicing a blade is shown. The method 700 may be at least partially executed by one or more systems or components, such as for example the system 600 of FIG. 6.

In block 704, a first image of a blade may be obtained. For example, as part of block 704 an image of a particular blade (potentially identified by, e.g., a serial number) may be captured. Alternatively, the image of block 704 may be established based on one or more specifications, blueprints, etc., associated with the blade. The image of block 704 may be used to establish a baseline for the blade and may be used to determine/monitor an evolution in terms of debris collection/aggregation in the blade over time.

In block 708, a second image of the blade may be obtained. The image of block 708 may be obtained based on a maintenance/service procedure performed with respect to the blade.

In block 712, the first and second images of the blade may be compared. The comparison may identify one or more regions of the blade that likely contain debris. If the comparison identifies such a region, flow may proceed to block 716; otherwise, the blade may be substantially debris-free and may be restored to service on an engine.

In block 716, a probe may be selected to target the region(s) identified in block 712. As part of block 716, one or more parameters (e.g., an insertion length, a direction of orientation of an opening) may be selected. As part of block 716, the selected probe may be inserted into the blade.

In block 720, a fluid source coupled to the probe may be enabled/activated to cause fluid from the fluid source to remove the debris in the region(s) identified in block 712.

In block 724, a third image of the blade may be obtained.

In block 728, the third image may be compared to at least one of the first or second images to confirm that the debris is removed (either completely or in an amount sufficient to be considered acceptable for use on an engine). If the comparison of block 728 reveals that the debris is removed, flow may proceed to block 732.

In block 732, one or more of the first, second, or third images may be saved/stored. For example, saving the third image may be used to establish a baseline of the blade, which is to say that the third image of block 724 may correspond to the first image of block 704 in a future execution of the method 700.

The method 700 is illustrative. In some embodiments, additional blocks/operations may be included. In some embodiments, one or more of the blocks (or one or more portions thereof) may be optional. In some embodiments, the blocks may execute in an order or sequence that is different from what is shown in FIG. 7.

In some embodiments, the comparisons of the images described above in connection with FIG. 7 may not occur. For example, in some embodiments an image of the blade may be obtained during a maintenance/servicing procedure (e.g., corresponding to the image of block 708) and that image may be examined simply to identify discernable patterns in the image that are likely representative of debris. In this respect, a comparison (e.g., block 712) of that image with, e.g., a prior image (e.g., the image of block 704) may not occur as the determination of whether debris is likely present in a given region may be based on the (second) image itself.

Aspects of the disclosure have been described in terms of illustrative embodiments thereof. Numerous other embodiments, modifications, and variations within the scope of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional in accordance with aspects of the disclosure. One or more features described in connection with a first embodiment may be combined with one or more features of one or more additional embodiments.

## Claims

1. A probe for servicing a turbine blade of an engine, comprising:
hardware configured to couple to a fluid source;
a stem;
a first opening included in the stem; and
a second opening included in the stem,
wherein the first opening is oriented at a non-zero valued angle relative to a length of the stem, wherein the angle is optionally a right angle, and
wherein the second opening is included in an end of the probe.

2. The probe of claim 1, wherein the first opening is sized to remove debris from the turbine blade, and the end is optionally a distal end relative to the fluid source.

3. A system comprising:
a turbine blade of an engine;
a machine that captures an image of the turbine blade; and
a probe that includes a stem with an opening formed in the stem, wherein the opening is oriented at a non-zero valued angle relative to a length of the stem and removes debris from the turbine blade captured in the image based on an ejection of a pressurized fluid from the opening, wherein the angle is optionally a right angle, and
wherein the debris is located on an interior surface of the turbine blade.

4. The system of claim 3, wherein the machine is an x-ray machine and the image is an x-ray image.

5. The system of claim 3 or 4, wherein the debris is located on a rib of the turbine blade.

6. The system of claim 3, 4 or 5, wherein the turbine blade includes a cooling hole, and wherein the debris enters the turbine blade via the cooling hole.

7. The system of any of claims 3 to 6, further comprising:
a processor; and
a non-transitory storage device that stores instructions that, when executed by the processor, causes the system to:
identify a region in which the debris is located,
wherein the region is optionally identified based on a comparison of the image with at least a second image.

8. The system of any of claims 3 to 7, wherein the machine captures a second image of the turbine blade subsequent to the removal of the debris.

9. The system of any of claims 3 to 8, wherein the second image is an image of the turbine blade taken after the blade was manufactured that is stored in a non-transitory storage device.

10. A method comprising:
obtaining an image of a turbine blade;
identifying, based on the image, a region in the interior of the turbine blade that includes debris;
inserting a probe into the turbine blade, the probe including a stem with an opening that is oriented at a non-zero valued angle relative to a length of the stem; and
activating a fluid source coupled to the probe to remove the debris.

11. The method of claim 10, further comprising:
rotating the probe to direct the opening towards the debris.

12. The method of claim 10 or 11, further comprising:
adjusting an insertion length of the stem based on an identification of the location of the region.

13. The method of claim 12, further comprising:
obtaining a second image of the turbine blade subsequent to activating the fluid source; and
determining that the debris is removed based on an examination of the second image.

14. The method of claim 13, wherein the step of determining that the debris is removed based on an examination of the second image includes comparing the second image to a third image, wherein the third image is an image of the turbine blade after it was last cleared of debris, or after it was originally manufactured.

15. The method of claim 13 or 14, wherein the step of obtaining an image includes using an X-ray machine to take the image and the step of obtaining a second image includes using an X-ray machine to take the second image.
